# EUROPÄISCHE PATENTSCHRIFT

(11) **EP 3 364 086 B1**
(45) Veröffentlichungstag und Bekanntmachung des Hinweises auf die Patenterteilung: **13.02.2019**
(21) Anmeldenummer: 17156966.8
(22) Anmeldetag: 20.02.2017
(51) Int. Cl.: F16L 19/12

(54) **VERBINDUNGSANORDNUNG ZUM ANSCHLUSS EINER ROHRLEITUNG**
CONNECTION ASSEMBLY FOR CONNECTING A PIPELINE
SYSTÈME DE LIAISON DESTINÉ À RACCORDER UNE CONDUITE

(43) Veröffentlichungstag der Anmeldung: 22.08.2018
(73) Patentinhaber: WALTER STAUFFENBERG GMBH & CO. KG, 58791 Werdohl (DE)
(72) Erfinder: König, Ulrich Stefan, 58849 Herscheid (DE)
(74) Vertreter: Patentanwälte Dörner & Kötter PartG mbB

(56) Entgegenhaltungen:
- EP-A1- 0 863 354
- WO-A1-93/25837
- DE-A1- 4 221 175
- US-A- 3 857 591

## Beschreibung

Die Erfindung betrifft eine Verbindungsanordnung zum Anschluss einer insbesondere metallischen Rohrleitung, mit einem eine Rohraufnahme für die Rohrleitung aufweisenden Verschraubungskörper, einer auf den Verschraubungskörper aufschraubbaren Überwurfmutter sowie einem zwischen dem Verschraubungskörper und der Überwurfmutter angeordneten Schneidring nach dem Oberbegriff des Patentanspruchs 1.

Eine derartige Verbindungsanordnung, wie sie in der EP 0 863 354 B1, der WO 93/25837 A1, der US 3 857 591 A sowie der DE 42 21 175 A1 beschrieben ist, dient der kraftformschlüssigen Verbindung einer starren, insbesondere metallischen Rohrleitung mit einem Gewindestutzen und ermöglicht so eine Rohrverschraubung. Hierbei ist der fluidführende Bereich zunächst mit einer metallischen Dichtung abgeschottet, die einerseits zwischen dem Außenkonus des Schneidrings und dem Innenkonus der Rohraufnahme und andererseits durch die in das Rohr eingepressten Schneidkanten gebildet ist. Im Anschluss an diese metallische Dichtung ist eine elastomere Umfangsdichtung als Weichdichtung positioniert. Dabei liegt die Umfangsdichtung genau am Übergang zur radialen Schulter des Schneidrings an. Bei der Montage muss der Schneidring soweit angezogen werden, bis die radiale Schulter des Schneidrings an der Stirnfläche des Verschraubungskörpers anschlägt. Hierbei ergibt sich die Problematik, dass in dem Fall, dass sich der Schneidring im Betrieb in einem Hydrauliksystem durch Vibrationen lockert, ein Spalt zwischen der Schulter des Schneidrings und der Stirnfläche des Verschraubungskörpers entstehen kann. Wird dieser Spalt zu groß, kann die Weichdichtung durch den Druck im Hydrauliksystem in diesen Spalt hinein extrudieren. Dieses Extrudieren bedeutet das Versagen der Weichdichtung.

Darüber hinaus hat sich als nachteilig erwiesen, dass die Dichtung im Bereich Schulter Schneidring / Stirnfläche Verschraubungskörper genau an einer scharfkantigen Kante des Verschraubungskörpers liegt. Hierdurch besteht die Gefahr einer Beschädigung der Weichdichtung.

Hier will die Erfindung Abhilfe schaffen. Der Erfindung liegt die Aufgabe zu Grunde, eine Verbindungsanordnung zum Anschluss einer insbesondere metallischen Rohrleitung der gattungsgemäßen Art bereitzustellen, bei der die Gefahr einer Extrusion der Weichdichtung in einen zwischen dem Schneidring und der Stirnfläche des Verschraubungskörpers gebildeten Spalt verhindert und die Gefahr einer Beschädigung vermieden ist. Gemäß der Erfindung wird diese Aufgabe durch die Merkmale des kennzeichnenden Teils des Patentanspruchs 1 gelöst.

Mit der Erfindung ist eine Verbindungsanordnung zum Anschluss einer insbesondere metallischen Rohrleitung der gattungsgemäßen Art bereitgestellt, bei der die Gefahr einer Extrusion der Weichdichtung in einen zwischen dem Schneidring und der Stirnfläche des Verschraubungskörpers gebildeten Spalt verhindert und die Gefahr einer Beschädigung vermieden ist. Dadurch, dass die Ringnut, welche die elastomere Umfangsdichtung aufnimmt, in dem Außenkonus des Schneidrings beabstandet zu seiner Anschlagfläche angeordnet ist, wobei zwischen der Ringnut und der Anschlagfläche eine Ringfläche gebildet ist, ist ein Kontakt der Umfangsdichtung mit der Anschlagfläche des Schneidrings und somit auch mit einem sich im Betrieb möglicherweise ausbildenden Spalt zwischen der Anschlagfläche des Schneidrings und der Stirnfläche des Verschraubungskörpers verhindert. Einer Extrusion der Umfangsdichtung in diesen Spalt ist damit wirksam entgegengewirkt.

Dadurch, dass an der Innenwand der Ringnut eine in die Ringnut hineinragende Nase angeformt ist, ist eine Hinterschneidung gebildet. Hierdurch ist einem partiellen Herausgleiten der Umfangsdichtung in Richtung Anschlagfläche weiter entgegengewirkt.

In Weiterbildung der Erfindung beträgt die Breite der durch die Ringnut begrenzten konischen Ringfläche wenigstens 0,4 mm, bevorzugt wenigstens 0,6 mm. Hierdurch ist eine gute Abkopplung der Umfangsdichtung von einem möglicherweise sich ausbildenden Spalt erzielt.

In Ausgestaltung der Erfindung schließt die der Anschlagfläche zugewandte Innenwand der Ringnut mit der Ringfläche einen Winkel von kleiner 90 Grad, vorzugsweise kleiner 89 Grad auf. Hierdurch ist einem partiellen Herausgleiten der Umfangsdichtung aus der Ringnut in Richtung der Anschlagfläche entgegengewirkt. Dieser Effekt wird insbesondere bei einem Winkel von kleiner 89 Grad erzielt, da die hierdurch gebildete Innenwand einen Hinterschnitt ausbildet.

In weiterer Ausgestaltung der Erfindung setzt die Außenmantelfläche der Nase die konische Ringfläche fort. Hierdurch ist eine Kantenbildung vermieden, wodurch die Gefahr einer Beschädigung der Umfangsdichtung vermindert ist.

In Weiterbildung der Erfindung schließt die der Anschlagfläche abgewandte Außenwand der Ringnut mit der an diese angrenzenden Außenkonusfläche zumindest in einem an den Außenkonus angrenzenden Bereich einen Winkel von größer 90 Grad ein. Hierdurch ist ein Hineingleiten der Umfangsdichtung in die Ringnut unterstützt, wodurch einer Beschädigung der Umfangsdichtung bei der Montage entgegengewirkt ist. Zudem ist die Montage der Umfangsdichtung erleichtert.

In Ausgestaltung der Erfindung ist der Übergang zwischen Ringnut und Außenkonus abgerundet ausgebildet. Hierdurch die das Hineingleiten der Umfangsdichtung in die Ringnut weiter unterstützt.

In weiterer Ausgestaltung der Erfindung weist die Außenwand der Ringnut im Querschnitt eine S-förmige Kontur auf. Hierdurch ist eine gute Kammerung der Umfangsdichtung bei gleichzeitig unterstütztem Hineingleiten der Umfangsdichtung in die Ringnut erzielt.

In alternativer Ausgestaltung der Erfindung ist der Übergang zwischen Ringnut und Außenkonus rechtwinklig ausgebildet, wobei die Außenwand der Ringnut im Querschnitt zumindest bereichsweise eine gerade Kontur aufweist. Dabei ist die Ringnut bevorzugt breiter als die Umfangsdichtung ausgebildet. Hierdurch ist eine sich über die gesamte Tiefe der Ringnut erstreckende Ausweichzone gebildet, wodurch die Dichtwirkung verbessert ist. Zugleich ist im unbelasteten Montagezustand eine flexible Ausbreitung der Umfangsdichtung ermöglicht, wodurch Beschädigungen vermieden sind. Vorteilhaft schließt die der Anschlagfläche abgewandte Außenwand der Ringnut mit der Mittelachse der Leitung dabei zumindest in einem an den Außenkonus angrenzenden Bereich einen Winkel 90 Grad mit der Mittelachse der Leitung ein.

In Weiterbildung der Erfindung beträgt die Tiefe der Ringnut wenigstens 15 Prozent, bevorzugt wenigstens 25 Prozent der Schneidringdicke in diesem Bereich. Hierdurch ist die Kammerung der Umfangsdichtung verbessert. Je nach Baugröße des Schneidrings differiert die besonders zu bevorzugende Ringnuttiefe. Während sich bei großen Baugrößen eine Ringnuttiefe von etwa 25 Prozent der Dicke als besonders geeignet erwiesen hat, beträgt die optimale Ringnuttiefe bei Schneidringen kleiner Baugröße bis zu 45 Prozent der Dicke.

Gegenstand der vorliegenden Erfindung ist weiterhin ein Schneidring zum Einsatz in einer solchen Verbindungsanordnung mit den Merkmalen des Patentanspruchs 8.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

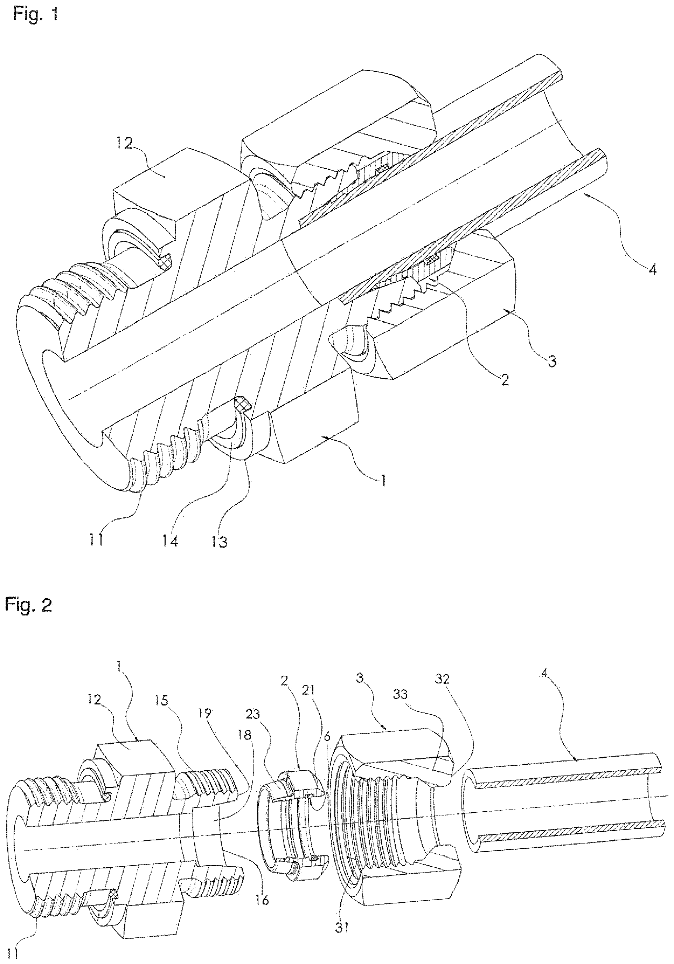

- Figur 1: die räumliche Darstellung einer Verbindungsanordnung;
- Figur 2: die Verbindungsanordnung aus Figur 1 in Explosionsdarstellung;

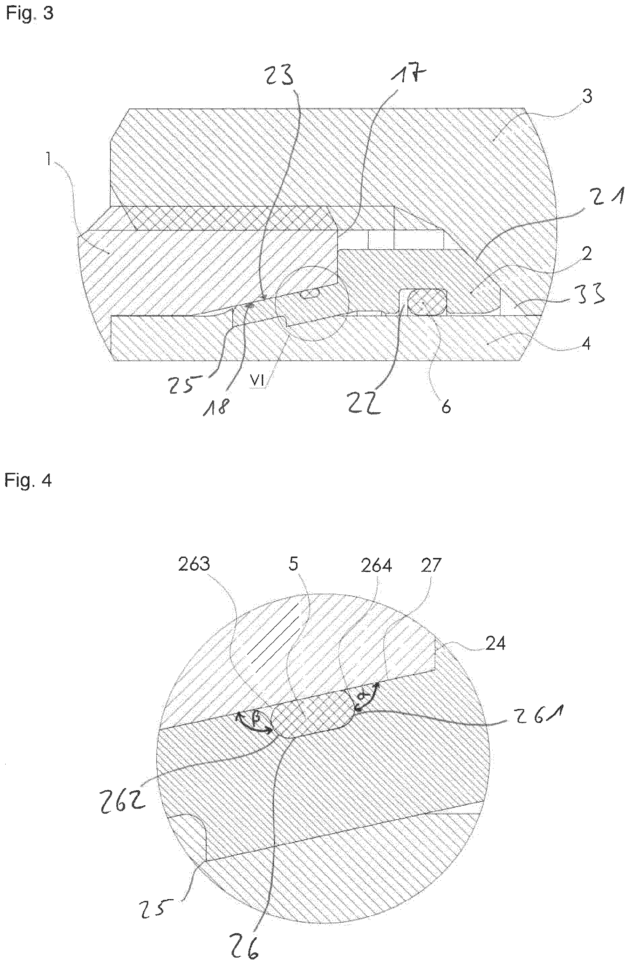

- Figur 3: die Detaildarstellung der Verbindungsstelle der Verbindungsanordnung aus Figur 1 im Querschnitt;
- Figur 4: die Detaildarstellung der Ausschnitts VI aus Figur 3;

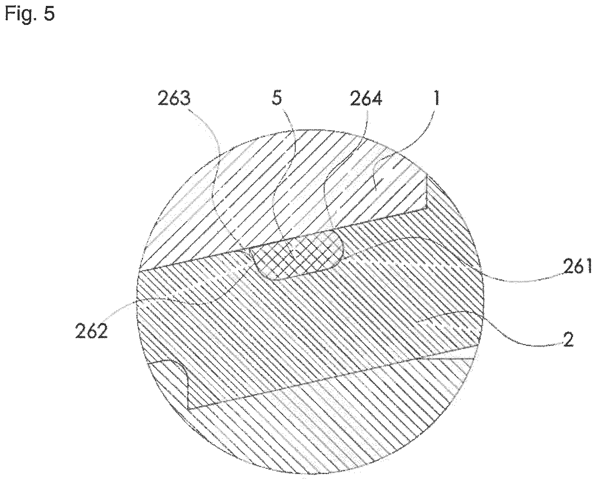

- Figur 5: die Darstellung der Anordnung aus Figur 4 mit hydraulisch belasteter Umfangsdichtung.

Die als Ausführungsbeispiel gewählte Verbindungsanordnung besteht im Wesentlichen aus einem Verschraubungskörper 1, der einen Schneidring 2 aufnimmt und auf den eine Überwurfmutter 3 aufschraubbar ist, wodurch der Schneidring 2 in eine aufgenommene Rohrleitung 4 eintreibbar ist.

Der Verschraubungskörper 1 ist im Wesentlichen ein hohlzylindrischer Metallkörper, der endseitig mit einem als Außengewinde ausgeführten Anschlussgewinde 11 versehen ist. Beabstandet zu dem Anschlussgewinde 11 ist ein umlaufender, Flansch 12 angeordnet, der auf seiner dem Anschlussgewinde 11 zugewandten Seite mit einem kreisringförmigen Steg 13 versehen ist, der eine Ringnut zur Aufnahme eines Dichtrings 14 begrenzt. Der Flansch 12 ist im Ausbildungsbeispiel als Sechskant ausgebildet.

Auf seiner dem Anschlussgewinde 11 gegenüberliegenden Seite des Flansches 12 ist ein weiteres Außengewinde 15 zur Aufnahme der Überwurfmutter 3 angeordnet. Im Bereich des Außengewindes 15 ist in dem Verschraubungskörper 1 innen eine durchmessererweiterte Rohraufnahme 16 eingeformt, durch die ein Anschlag 17 gebildet ist und die endseitig einen sich nach außen erweiternden Innenkonus 18 aufweist.

Der Schneidring 2 ist im Wesentlichen hohlzylindrisch ausgebildet und endseitig mit einer konisch zulaufenden Gleitfläche 21 versehen. Innen ist eine Ringnut 22 zur Aufnahme eines O-Rings 6 zur Abdichtung des Schneidrings 2 gegenüber der Rohrleitung 4 eingebracht. An seinem der Gleitfläche 21 gegenüberliegenden Ende ist an den Schneidring 2 ein im Außendurchmesser reduzierter Außenkonus 23 angeformt, durch den eine Anschlagfläche 24 gebildet ist und der auf seiner Innenmantelfläche abgestuft ist, wodurch zwei Schneidkanten 25 gebildet sind. Außen ist in den Außenkonus 23 beabstandet zur Anschlagfläche 24 eine Ringnut 26 eingebracht, die eine Umfangsdichtung 5 aufnimmt und die eine Ringfläche 27 begrenzt. Im Ausführungsbeispiel weist der Außenkonus einen Steigungswinkel von 12 Grad zu seiner Rotationsmittelachse auf, d.h. der Öffnungswinkel beträgt 24 Grad. Die Breite der Ringfläche 27 beträgt 0,7 mm. Die Ringnut 26 des Außenkonus 23 weist einen im Wesentlichen rechteckförmigen Querschnitt auf. An die der Anschlagfläche 24 zugewandte Innenwand 261 der Ringnut 26 ist eine nach innen ragende Nase 264 angeformt. Die Nase 264 ist dabei derart ausgebildet, dass sie mit ihrer Außenseite mit der Ringfläche 27 fluchtet und diese fortführt. Ihre Innenfläche führt dabei die Innenkontur der Innenwand 261 fort, die so zu einer kreisbogenförmigen Querschnittskontur ergänzt wird. Hierdurch ist eine Hinterschneidung erzielt, wodurch eine deutlich bessere Kammerung der Umfangsdichtung 5 bewirkt ist. Diese um die Nase 264 ergänzte Ringnut 26 bewirkt zudem eine deutlich bessere Montierbarkeit des Schneidrings 2, da sich die Umfangsdichtung 5 während des Montageprozesses in diese Hinterschneidung hineindrücken kann. Durch den anliegenden hydraulischen Druck kann die Umfangsdichtung 5 bedingt durch die angeordnete Ausweichzone 263 im Betrieb eine optimal dichtende Lage einnehmen, wobei sie stets gegen die Hinterschneidung gedrückt und durch diese gehalten wird.

Die der Anschlagfläche 24 abgewandte Außenwand 262 der Ringnut 26 weist eine S-förmige Querschnittskontur auf, wodurch ein abgerundeter Gleitrand gebildet ist, der ein gutes Hineingleiten der Umfangsdichtung 5 in die Ringnut 26 ermöglicht. Zugleich ist in diesem Bereich eine Ausweichzone 263 für die Umfangsdichtung 5 gebildet, die im unbelasteten Montagezustand eine Ausdehnung der Umfangsdichtung 5 ermöglicht. Bei Druckbeaufschlagung der Umfangsdichtung 5 wird diese in Richtung der Innenwand 261 gedrückt.

Die Überwurfmutter 3 ist im Wesentlichen in Art einer Sechskantmutter ausgebildet, deren Innengewinde 31 mit dem Außengewinde 15 des Verschraubungskörpers 1 korrespondiert. An ihrem dem Flansch 12 abgewandten Ende ist an die Überwurfmutter 3 ein Ringbund 32 angeformt, der eine Durchführung für die Rohrleitung 4 aufweist. Innen ist der Ringbund 32 mit einer konisch sich nach innen erweiternden Innenkonusfläche 33 versehen, deren Steigung im Wesentlichen der Steigung der Gleitfläche 21 des Schneidrings 2 entspricht. Bei der Montage der erfindungsgemäßen Verbindungsanordnung wird die Rohrleitung 4 in die Rohraufnahme 16 des Verschraubungskörpers eingebracht bis diese an dem Anschlag 17 anliegt. Der Schneidring 2 wird mit seiner Gleitfläche 21 an die Innenkonusfläche 33 der Überwurfmutter 3 gelegt, wonach diese auf das Außengewinde 15 des Verschraubungskörpers aufgeschraubt wird. Dabei greift der Schneidring 2 mit seinem Außenkonus 23 in den Innenkonus 18 der Rohraufnahme 16 des Verschraubungskörpers 1 ein und wirkt hierbei mit diesem zusammen, wobei der Schneidring 2 beim Anziehen der Überwurfmutter 3 mit seiner Anschlagfläche 24 an die Stirnfläche 19 des Verschraubungskörpers 1 gelegt und im Bereich des Außenkonus 23 radial nach Innen gestaucht wird, wodurch dessen Schneidkanten 25 unter Kerbwirkung insbesondere formschlüssig in das Material der Rohrleitung 4 eindringt. Gleichzeitig wird zwischen der konischen Gleitfläche 21 des Schneidrings 2 und der Innenkonusfläche 33 des Ringbundes der Überwurfmutter eine Keilwirkung zum radialen Verpressen des Schneidrings 2 sowie auch eine Selbstzentrierung erzielt.

Der Schneidring 2 hat zum einen die Funktion der mechanischen Fixierung der Rohrleitung 4 durch die über dessen Schneidkanten 25 erzielte Formschlussverbindung; zum anderen hat er eine metallische Dichtfunktion über die in die Rohrleitung einschneidenden Schneidkanten 25 einerseits und seinen an dem Innenkonus 18 der Rohraufnahme 16 metallisch dichtend anliegenden Außenkonus 23 andererseits, wobei eine zusätzliche Dichtung über die zwischen diesen Konen angeordnete, als Weichdichtung ausgeführte Umfangsdichtung 5 erfolgt, die in der Ringnut 26 gekammert angeordnet ist. Dabei ist durch die S-förmige Querschnittskontur der Außenwand 262 der Ringnut 26 eine Ausweichzone 263 ausgebildet.

## Patentansprüche

1. Verbindungsanordnung zum Anschluss einer insbesondere metallischen Rohrleitung (4), mit einem eine Rohraufnahme (16) für die Rohrleitung (4) aufweisenden Verschraubungskörper (1), einer auf den Verschraubungskörper (1) aufschraubbaren Überwurfmutter (3) sowie einem zwischen dem Verschraubungskörper (1) und der Überwurfmutter (3) angeordneten Schneidring (2), wobei der Schneidring (2) einen Außenkonus (23) aufweist, der derart mit einem Innenkonus (18) der Rohraufnahme (16) des Verschraubungskörpers (1) zusammenwirkt, dass er beim Anziehen der Überwurfmutter (3) bereichsweise radial nach innen verformt wird und mit mindestens einer Schneidkante (25) unter Kerbwirkung formschlüssig in das Material der Rohrleitung (4) einschneidet, und wobei der Schneidring (2) im Anschluss an den Außenkonus (23) eine im Wesentlichen radiale Anschlagfläche (24) zur anzugsbegrenzenden Anlage an einer Stirnfläche (19) des Verschraubungskörpers (1) aufweist, und wobei in einer Ringnut (26) im Bereich des Außenkonus (23) des Schneidrings (2) eine elastomere Umfangsdichtung (5) zur Anlage in dem Innenkonus (18) der Rohraufnahme (16) des Verschraubungskörpers (1) angeordnet ist, wobei die Ringnut (26), welche die elastomere Umfangsdichtung (5) aufnimmt, in dem Außenkonus (23) des Schneidrings (2) beabstandet zu seiner Anschlagfläche (24) angeordnet ist, wobei zwischen der Ringnut (26) und der Anschlagfläche (24) eine Ringfläche (27) gebildet ist, **dadurch gekennzeichnet, dass** an der der Anschlagfläche (24) zugewandten Innenwand (261) der Ringnut (26) eine in die Ringnut (26) hineinragende Nase (264) angeformt ist, wodurch eine Hinterschneidung gebildet ist.

2. Verbindungsanordnung nach Anspruch 1, **dadurch gekennzeichnet, dass** die Breite der Ringfläche (27) wenigstens 0,4 mm, bevorzugt wenigstens 0,6 mm beträgt.

3. Verbindungsanordnung nach Anspruch 1 oder 2, **dadurch gekennzeichnet, dass** die der Anschlagfläche (24) zugewandte Innenwand (261) der Ringnut (26) mit der Ringfläche (27) einen Winkel α von kleiner 90 Grad, vorzugsweise kleiner 89 Grad einschließt.

4. Verbindungsanordnung nach einem der vorgenannten Ansprüche, **dadurch gekennzeichnet, dass** die Außenmantelfläche der Nase (264) die Ringfläche (27) fortsetzt.

5. Verbindungsanordnung nach einem der vorgenannten Ansprüche, **dadurch gekennzeichnet, dass** die der Anschlagfläche (24) abgewandte Außenwand (262) der Ringnut (26) mit der an diese angrenzenden Außenkonusfläche zumindest in einem an den Außenkonus (23) angrenzenden Bereich einen Winkel β von größer 90 Grad einschließt.

6. Verbindungsanordnung nach Anspruch 5, **dadurch gekennzeichnet, dass** der Übergang zwischen Ringnut (26) und Außenkonus (23) abgerundet ausgebildet ist, wobei bevorzugt die Außenwand (262) der Ringnut (26) im Querschnitt eine S-förmige Kontur aufweist.

7. Verbindungsanordnung nach einem der vorgenannten Ansprüche, **dadurch gekennzeichnet, dass** die Tiefe der Ringnut (26) wenigstens 15 Prozent, bevorzugt wenigstens 25 Prozent der Schneidringdicke in diesem Bereich beträgt.

8. Schneidring zur Verwendung in einer Verbindungsanordnung nach einem der vorgenannten Ansprüche, mit einem Außenkonus (23), der durch eine radiale Anschlagfläche (24) begrenzt ist, wobei in dem Außenkonus (23) beabstandet zu der Anschlagfläche (24) eine Ringnut (26) angeordnet ist, welche eine elastomere Umfangsdichtung (5) aufnimmt, wobei zwischen der Ringnut (26) und der Anschlagfläche (24) eine Ringfläche (27) gebildet ist, deren Breite vorzugsweise wenigstens 0,4 mm, besonders bevorzugt wenigstens 0,6 mm beträgt, **dadurch gekennzeichnet, dass** an der der Anschlagfläche (24) zugewandten Innenwand (261) der Ringnut (26) eine in die Ringnut (26) hineinragende Nase (264) angeformt ist, wodurch eine Hinterschneidung gebildet ist.

9. Schneidring nach Anspruch 8, **dadurch gekennzeichnet, dass** die der Anschlagfläche (24) abgewandte Außenwand (262) der Ringnut (26) zu dem an diese angrenzenden Außenkonus (23) zumindest in einem an den Außenkonus (23) angrenzenden Bereich einen Winkel β von größer 90 Grad aufweist, wobei der Übergang zwischen Ringnut (26) und Außenkonus (23) bevorzugt abgerundet ausgebildet ist und wobei die Außenwand (262) der Ringnut (26) besonders bevorzugt im Querschnitt eine S-förmige Kontur aufweist.

## Claims

1. Connection assembly for connecting an, in particular, metallic pipeline (4) with a screw body (1) having a pipe receptacle (16) for the pipeline (4), a union nut (3) which can be screwed onto the screw body (1) as well as a cutting ring (2) arranged between the screw body (1) and the union nut (3), wherein the cutting ring (2) has an outer cone (23), which cooperates with an inner cone (18) of the pipe receptacle (16) of the screw body (1) in such a manner that it is partially deformed radially inward when the union nut (3) is tightened and with at least one cutting edge (25) form-fittingly cuts into the material of the pipeline (4) with a notch effect and wherein the cutting ring (2), adjacent to the outer cone (23), has a substantially radial abutment surface (24) for the tightening-limiting abutment on an end face (19) of the screw body (1) and wherein in an annular groove (26) in the area of the outer cone (23) of the cutting ring (2) an elastomeric peripheral seal (5) is arranged for abutment in the inner cone (18) of the pipe receptacle (16) of the screw body (1), wherein the annular groove (26), which receives the elastomeric peripheral seal, is arranged in the outer cone (23) of the cutting ring (2) at a distance from its abutment surface (24), wherein between the annular groove (26) and the abutment surface (24) an annular surface (27) is formed, **characterised in that** a nose (264) projecting into the annular groove (26) is moulded on the inner wall (261) of the annular groove (26) facing the abutment surface (24), whereby an undercut is formed.

2. Connection assembly according to claim 1, **characterised in that** the width of the annular surface (27) is at least 0.4 mm, preferably at least 0.6 mm.

3. Connection assembly according to claim 1 or 2, **characterised in that** the inner wall (261) of the annular groove (26) facing the abutment surface (24) with the annular surface (27) encloses an angle of less than 90 degrees, preferably less than 89 degrees.

4. Connection assembly according to one of the previous claims, **characterised in that** the outer surface of the nose (264) continues the annular surface (27).

5. Connection assembly according to one of the previous claims, **characterised in that** the outer wall (262) of the annular groove (26) facing away from the abutment surface (24) with the outer cone surface adjacent to same encloses an angle of greater than 90 degrees in an area adjacent to the outer cone (23).

6. Connection assembly according to claim 5, **characterised in that** the transition between annular groove (26) and outer cone (23) is rounded, wherein preferably the outer wall (262) of the annular groove (26) has an S-shaped contour in cross-section.

7. Connection assembly according to one of the previous claims, **characterised in that** the depth of the annular groove (26) is at least 15 percent, preferably at least 25 percent of the cutting ring thickness in this area.

8. Cutting ring for use in a connection assembly according to one of the previous claims, having an outer cone (23), which is delimited by a radial abutment surface (24), wherein in the outer cone (23) at a distance from the abutment surface (24) an annular groove (26) is arranged, which receives an elastomeric peripheral seal (5), wherein between the annular groove (26) and the abutment surface (24) an annular surface (27) is formed, the width of which is preferably at least 0.4 mm, particularly preferably at least 0.6 mm, **characterised in that** a nose (264) projecting into the annular groove (26) is moulded on the inner wall (261) of the annular groove (26) facing the abutment surface (24), whereby an undercut is formed.

9. Cutting ring according to claim 8, **characterised in that** the outer wall (262) of the annular groove (26) facing away from the abutment surface (24) has an angle of greater than 90 degrees with respect to the outer cone (23) adjacent to same at least in an area adjacent to the outer cone (23), wherein the transition between annular groove (26) and outer cone (23) is preferably rounded and wherein the outer wall (262) of the annular groove (26) particularly preferably has an S-shaped contour in cross-section.

## Revendications

1. Système de liaison destiné à raccorder une conduite (4) notamment métallique, comprenant un corps (1) de raccord à visser présentant un logement (16) pour la conduite (4), un écrou raccord (3) vissable sur le corps (1) de raccord ainsi qu'une bague coupante (2) disposée entre le corps (1) de raccord à visser et l'écrou raccord (3), sachant que la bague coupante (2) présente un cône extérieur (23) qui interagit avec un cône intérieur (18) du logement (16) pour conduite du corps (1) de raccord à visser, de sorte que lors du serrage de l'écrou raccord (3) il se trouve localement déformé radialement vers l'intérieur et qu'il incise, au moyen d'au moins une arête coupante (25) avec effet d'entaille et par adhérence de formes, le matériau constitutif de la conduite (4), et sachant que la bague coupante (2) présente, à la suite du cône extérieur (23), une surface butée (24) essentiellement radiale venant appliquer, pour limiter le serrage, contre une surface frontale (19) du corps (1) de raccord à visser, et sachant que dans une gorge annulaire (26) dans la zone du cône extérieur (23) de la bague coupante (2) se trouve un joint périphérique (5) en élastomère en applique dans le cône intérieur (18) du logement (16) pour conduite du corps (1) de raccord à visser, sachant que la gorge annulaire (26) qui reçoit le joint périphérique (5) en élastomère est disposée dans le cône extérieur (23) de la bague coupante (2) à distance de sa surface butée (24), sachant qu'une surface annulaire (27) est formée entre la gorge annulaire (26) et la surface butée (24), **caractérisé en ce que** sur la paroi intérieure (261) de la gorge annulaire (26), paroi qui regarde la surface butée (24), un nez (264) faisant saillie dans la gorge annulaire (26) est modelé, faisant qu'une contre-dépouille est formée.

2. Système de liaison selon la revendication 1, **caractérisé en ce que** la largeur de la surface annulaire (27) est d'au moins 0,4 mm, mais de préférence d'au moins 0,6 mm.

3. Système de liaison selon la revendication 1 ou 2, **caractérisé en ce que** la paroi intérieure (261) de la gorge annulaire (26), paroi qui regarde la surface butée (24), forme avec la surface annulaire (27) un angle inférieur à 90 degrés, de préférence inférieur à 89 degrés.

4. Système de liaison selon l'une des revendications précédentes, **caractérisé en ce que** la surface enveloppante extérieure du nez (264) prolonge la surface annulaire (27).

5. Système de liaison selon l'une des revendications précédentes, **caractérisé en ce que** la paroi extérieure (262) de la gorge annulaire (26), paroi qui ne regarde pas la surface butée (24), forme avec la surface conique extérieure limitrophe de celle-ci, au moins dans une zone limitrophe du cône extérieur (23), un angle β de plus de 90 degrés.

6. Système de liaison selon la revendication 5, **caractérisé en ce que** la transition entre la gorge annulaire (26) et le cône extérieur (23) est configurée arrondie, sachant que de préférence la paroi extérieure (262) de la gorge annulaire (26) présente une section dont le contour a la forme d'un S.

7. Système de liaison selon l'une des revendications précédentes, **caractérisé en ce que** la profondeur de la gorge annulaire (26) représente au moins 15 pour cent, de préférence 25 pour cent de l'épaisseur de la bague coupante dans cette zone.

8. Bague coupante à utiliser dans un système de liaison selon l'une des revendications précédentes, comprenant un cône extérieur (23) limité par une surface butée (24) radiale, sachant que dans le cône extérieur (23), à distance de la surface butée (24), est disposée une bague annulaire (26) qui reçoit un joint périphérique (5) en élastomère, sachant qu'entre la gorge annulaire (26) et la surface butée (24) est formée une surface annulaire (27) dont la largeur fait de préférence au moins 0,4 mm, de manière particulièrement préférentielle au moins 0,6 mm, **caractérisé en ce que** sur la paroi intérieure (261) de la gorge annulaire (26), paroi qui regarde la surface butée (24), un nez (264) faisant saillie dans la gorge annulaire (26) est modelé, faisant qu'une contre-dépouille est formée.

9. Bague coupante selon la revendication 8, **caractérisée en ce que** la paroi extérieure (262) de la gorge annulaire (26), paroi qui ne regarde pas la surface butée (24), forme par rapport au cône extérieur (23) limitrophe de celle-ci un angle β de plus de 90 degrés au moins dans une zone limitrophe du cône extérieur (23), sachant que la transition entre la gorge annulaire (26) et le cône extérieur (23) est configurée de préférence arrondie et sachant que la paroi extérieure (262) de la bague annulaire (26) présente de manière particulièrement préférentielle une section dont le contour a la forme d'un S.
